# EUROPÄISCHE PATENTSCHRIFT

(11) **EP 2 602 641 B1**
(45) Veröffentlichungstag und Bekanntmachung des Hinweises auf die Patenterteilung: **26.02.2014**
(21) Anmeldenummer: 11192216.7
(22) Anmeldetag: 06.12.2011
(51) Int. Cl.: G01S 17/66, G06T 7/00

(54) **Lasertracker mit positionssensitiven Detektoren zur Suche eines Ziels**
Laser tracker with position-sensitive detectors for searching a target
Appareil de suivi laser doté de détecteurs sensibles à la position pour la recherche d'une cible

(43) Veröffentlichungstag der Anmeldung: 12.06.2013
(73) Patentinhaber: Leica Geosystems AG, 9435 Heerbrugg (CH)
(72) Erfinder: Markendorf, Albert, CH-5046 Walde (CH)
(74) Vertreter: Kaminski Harmann

(56) Entgegenhaltungen:
- EP-A1- 0 553 266
- EP-A2- 2 071 283
- WO-A1-2007/079600
- WO-A1-2010/148525
- HERNÂ'N BADINO ET AL: "Integrating LIDAR into Stereo for Fast and Improved Disparity Computation", 3D IMAGING, MODELING, PROCESSING, VISUALIZATION AND TRANSMISSION (3DIMPVT), 2011 INTERNATIONAL CONFERENCE ON, IEEE, 16. Mai 2011 (2011-05-16), Seiten 405-412, XP031896512, DOI: 10.1109/3DIMPVT.2011.58 ISBN: 978-1-61284-429-9
- POINT GREY RESEARCH: "Versatile digital camera", 20040420 , 20. April 2004 (2004-04-20), Seiten 1-3, XP007920361, Gefunden im Internet: URL:http://www.ptgrey.com/products/digiclo ps/Digiclops.pdf [gefunden am 2012-03-08]

## Beschreibung

Die Erfindung betrifft ein Koordinatenmessgerät, insbesondere einen Lasertracker, zur fortlaufenden Verfolgung eines reflektierenden Ziels und zur Entfernungsbestimmung zu dem Ziel nach dem Oberbegriff des Anspruchs 1 und ein Verfahren zum Auffinden des Ziels nach Anspruch 10.

Messvorrichtungen, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z.B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lage zueinander bekannt ist, kann auf eine Orientierung eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der,Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen. Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Sensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1 bekannt. Ausserdem ist eine Zielwiederfindung auf ähnliche Weise bekannt aus dem Bereich der Geodäsie durch die EP 2 071 283 A2,

In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird. Aufgrund des Versatzes der durch den Sensor definierten optischen Sensorachse und der Achse entlang derer sich der Messlaserstrahl ausbreitet, kann das Ausrichten des Strahls auf das Ziel mittels der sensorbasierten Richtungsbestimmung zum Ziel und damit das Ankoppeln nicht in einem direkten Schritt erfolgen. Für ein feststehendes Ziel sind hierfür mehrere Iterationsschritte mit jeweils einem Messvorgang (erneute Bestimmung einer Richtung zum Ziel mit dem Sensor) zur Annäherung des Laserstrahls erforderlich. An einer derartigen Annäherungsmethode ist daher nachteilig, dass das Aufsuchen und Anzielen des Ziels ein zeitintensiver Vorgang (da iterativ) ist und das Aufsuchen, insbesondere bei einer Relativbewegung des Ziels zum Sensor, nicht robust und eindeutig ist. Des Weiteren kann bei einer Bewegung des Ziels relativ zum Lasertracker keine Annäherung des Laserstrahls zum Ziel mehr gelingen, da sich eine Abweichung zwischen dem mittels des Sensors detektierten Ziel und dem Laserstrahl dabei fortlaufend verändert. Eine iterative Annäherung des Strahls an das Ziel kann aufgrund dieser während der Bewegung des Ziels anhaltenden Abweichungsveränderung so nicht erfolgen. Jeder Iterationsschritt mit einem erneuten Erfassen eines Reflexes entspricht dabei einer ersten solchen Messung auf ein (neues) Ziel. Generell ergibt sich somit ein grosser Nachteil solcher Anzielsysteme dazu, dass feststehende Ziele nur mit einem relativ sehr grossen Zeitaufwand angezielt werden können und das direkte Anzielen bewegter Ziele unmöglich ist.

Es ist daher Aufgabe der vorliegenden Erfindung einen verbesserten Lasertracker mit einer Funktionalität zum präzisen und schnelleren Auffinden und insbesondere Anzielen eines Ziels bereitzustellen.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur fortlaufenden Verfolgung eines reflektierenden Ziels und zur Positionsbestimmung des Ziels. Der Tracker weist dabei eine Basis, die eine Stehachse definiert, und eine Strahllenkeinheit zur Emission einer Messstrahlung und zum Empfang von zumindest einem Teil der am Ziel reflektierten Messstrahlung auf, wobei die Strahllenkeinheit um die Stehachse und eine Neigungsachse relativ zur Basis motorisiert schwenkbar ist und durch eine Emissionsrichtung der Messstrahlung eine Messachse definiert ist. Ferner verfügt der Lasertracker über eine Feindistanzmesseinheit zur präzisen Distanzbestimmung zum Ziel vermittels der Messstrahlung, über eine Winkelmessfunktionalität zur Bestimmung einer Ausrichtung der Strahllenkeinheit relativ zur Basis und über eine Zielsucheinheit. Die Zielsucheinheit weist zudem Beleuchtungsmittel zur Beleuchtung des Ziels mit elektromagnetischer Beleuchtungsstrahlung, eine erste ein erstes Sichtfeld definierende Kamera mit einem ersten positionssensitiven Detektor und eine derart konfigurierte Steuerungs- und Auswerteeinheit auf, dass bei Ausführung einer Suchfunktionalität ein Auffinden des Ziels in Abhängigkeit von einer ersten Zielposition erfolgt. Hierbei ist mit der ersten Kamera ein erstes Bild erfassbar, im ersten Bild zumindest ein Teil der am Ziel reflektierten Beleuchtungsstrahlung als erste Zielposition bestimmbar, und die erste Kamera mit deren optischer Achse versetzt zur Messachse angeordnet.

Ausserdem verfügt die Zielsucheinheit über eine zweite ein zweites Sichtfeld definierende Kamera mit einem zweiten positionssensitiven Detektor, wobei mit der zweiten Kamera ein zweites Bild erfassbar ist und im zweiten Bild zumindest ein Teil der am Ziel reflektierten Beleuchtungsstrahlung als zweite Zielposition bestimmbar ist und die zweite Kamera mit relativ zur ersten Kamera bekannter und fixer Kamerapositionierung derart angeordnet ist, dass die Sichtfelder der ersten und zweiten Kamera zumindest teilweise überlappen und die zweite Kamera mit deren optischer Achse versetzt zur Messachse angeordnet ist. Weiters erfolgt bei Ausführung der Suchfunktionalität das Auffinden des Ziels in Abhängigkeit von der ersten und zweiten Zielposition.

In einer beispielhaften Ausführungsform eines erfindungsgemässen Lasertrackers kann mittels der beiden Kameras ein Ziel erfasst werden und das Ziel auf Basis der dabei erzeugten Bilder und der in den Bildern bestimmten Zielpositionen gefunden werden. Die Kameras weisen durch deren Anordnung am Tracker dabei ein gemeinsames, überlappendes Sichtfeld zum Erfassen des Ziels auf. Somit kann anhand einer Zusammenschau der Bilder das Ziel gefunden und lokalisiert werden. Das Erfassen der Bilder kann - insbesondere während einer Schwenkbewegung der Strahllenkeinheit - fortlaufend erfolgen, wobei eine Bildauswertung, z.B. mittels Bildverarbeitung, hinsichtlich einer Bewertung von erfassten Zielen, d.h. ob ein reflektierendes Ziel im Bild erfasst ist, erfolgt. Wird ein derartiges Ziel erkannt, so kann die Strahllenkeinheit so ausgerichtet werden, dass dieses im Überlappungsbereich der beiden Sichtfelder der Kameras mit beiden Kameras erfasst und im Rahmen des Zielsuchvorgangs gefunden werden kann.

Im Gegensatz zu Methoden der Zielsuche des Standes der Technik kann die Steuerungs- und Auswerteeinheit dabei erfindungsgemäss derart konfiguriert sein, dass bei Ausführung der Suchfunktionalität Vieldeutigkeiten, die bei einer Heranziehung von nur der ersten Zielposition, welche mittels der ersten Kamera bestimmt wurde, zum Auffinden des Ziels und durch eine durch die Messrichtung und die und die optischen Achsen der ersten und zweiten Kamera gegebene Parallaxe vorhanden sind, durch eine gemeinsame Heranziehung von sowohl der ersten als auch der zweiten Zielposition zum Auffinden des Ziels aufgelöst werden.

Bei der Verwendung von nur einer Kamera zur Suche des Ziels und einem Versatz der optischen Achse der Kamera relativ zur Messachse der Messstrahlung kann das Ziel mittels der Kamera nicht eindeutig lokalisiert werden, da aus einem Bild so nur eine Richtungsinformation ableitbar ist, jedoch keine Entfernung zum Ziel und somit keine Position des Ziels bestimmbar ist. Ein Ausrichten des Messstrahls auf das Ziel ist somit nicht direkt, d.h. in einem Schritt, möglich. Ein Vorteil der erfindungsgemässen Heranziehung der Bild- und Zielpositionsinformationen zweier in einem bekannten Verhältnis positionierter Kameras ist, dass das Ziel direkt gefunden werden kann und kein iteratives Annähern an das Ziel durchgeführt werden muss sondern das Anzielen direkt erfolgen kann.

Zum Auffinden des Ziels kann die Steuerungs- und Auswerteeinheit erfindungsgemäss derart konfiguriert sein, dass bei Ausführung der Suchfunktionalität in Abhängigkeit von der ersten und zweiten Zielposition eine Grobentfernung zum Ziel bestimmt wird.

Durch die bekannte relative Positionierung der Kameras (bekannte photogrammetrische Basis) und den bekannten Versatz der Kameras relativ zur Messachse kann anhand allgemein bekannter Prinzipien der Stereophotogrammetrie eine Entfernung zum Ziel, an dem die Beleuchtungsstrahlung reflektiert wird, auf Basis der im Bild erfassten Reflexionen am Ziel bestimmt bzw. berechnet werden. Auf der Stereophotogrammetrie basierende Systeme sind beispielsweise bekannt aus "Integrating LIDAR into Stereo for Fast and Improved Disparity Computation", Hernan Bandino et al; 3D Imaging, Modeling, Processing, Visualization and Transmission; 2011 International Conference oder aus der Produktbeschreibung "Versatile digital camera", Point Gray Research.

Im Speziellen kann in diesem Zusammenhang erfindungsgemäss die Steuerungs- und Auswerteeinheit derart konfiguriert sein, dass bei Ausführung der Suchfunktionalität in Abhängigkeit von der ersten und zweiten Zielposition jeweils eine Zielrichtung zum Ziel abgeleitet und eine Grobposition in Abhängigkeit von den Zielrichtungen bestimmt wird, insbesondere mittels Photogrammetrie.

Wird zusätzlich zu einer bestimmten Entfernung zum Ziel eine Richtungsinformation zum Ziel berücksichtigt, so kann mit den erfassten Bildern der Kameras eine grobe Position des Ziels berechnet werden. Hierfür können jeweils Richtungen aus den in den Bildern erfassten Zielpositionen abgeleitet und mit den Entfernungsinformationen verknüpft werden.

Ein weiterer Aspekt der Erfindung betrifft die Positionierung der Kameras am Lasertracker. Erfindungsgemäss können die Kameras und die Messachse derart zueinander angeordnet sein, dass die Messachse zumindest teilweise in einem durch die überlappenden Sichtfelder der ersten und zweiten Kamera definierten Überlappungsbereich liegt. Hierdurch kann eine Erfassung des Ziels mit den beiden Kameras und eine Hinführen des Messlaserstrahls auf das Ziel realisiert werden. Insbesondere bei der Anzielung bewegter Ziele ist eine solche Überscheidung der Messachse mit dem Überlappungsbereich im Rahmen des Anzielprozesses vorteilhaft.

Erfindungsgemäss können die erste und zweite Kamera dabei derart angeordnet sein, dass deren optische Achsen jeweils parallel versetzt oder in einem definierten Winkel relativ zur Messachse angeordnet sind.

In speziellen Ausführungsformen ist somit ein (gewinkelter) Versatz der optischen Achsen relativ zur Messachse in der Art realisierbar, dass die optischen Achsen jeweils zur Messachse "hinschielen" oder von dieser "wegschielen", folglich nicht parallel zur Messachse verlaufen. Eine solche Anordnung kann beispielsweise für das Erzeugen eines relativ grossen Überlappungsbereichs der Sichtfelder oder um ein möglichst grosses Gesamtsichtfeld zu generieren vorgesehen sein.

Generell sind die im Zusammenhang mit der vorliegenden Erfindung genannten Kameras mit positionssensitiven Detektoren derart ausgebildet, dass deren Sichtfelder relativ zur Messstrahlung bzw. zum Öffnungswinkel der Messstrahlung gross sind, d.h. die Sichtfelder sind grösser als der Öffnungswinkel des Strahls, um einen verhältnismässig grossen Bereich einer Messumgebung mit potentiellen Zielen zu erfassen.

Im Gegensatz zu diesen Kameras weist ein anderer Typ von positionssensitivem Detektor (PSD), welcher beispielsweise in der Teleskopeinheit eines Lasertrackers verbaut ist und zur Feinanzielung und Verfolgung eines Ziels dient, einen engen Sichtbereich auf. Diese PSD ist derart angeordnet, dass sie die am Ziel reflektierte Messstrahlung detektieren kann und auf Basis dieser Detektion eine Ablage der erfassten Strahlung von einem Sollwert ermittelbar macht (die PSD ist also an den Messstrahlengang gekoppelt). In Abhängigkeit dieser Ablage kann dann eine Abweichung des Messlaserstrahls vom Zentrum eines Retroreflektors bestimmt werden und diese Strahlung so neu ausgerichtet werden, dass der Strahl zentral auf den Reflektor trifft. Im Weiteren ist ein derartiger Detektor nicht zur Erfassung eines Bildes im Sinne der Erfindung geeignet, da allein der retro-reflektierte Laserstrahl detektiert und dessen Position ausgewertet wird.

Neben dem parallelen Versatz der optischen Achsen oder einer definierten gewinkelten Anordnung (schielend) der optischen Achsen relativ zur Messachse können die erste und zweite Kamera erfindungsgemäss achsensymmetrisch relativ zur Messachse angeordnet sind. In diesem Zusammenhang können z.B. zwei Kameras an einer gemeinsamen Seite des Lasertrackers so angeordnet sein, dass eine Verbindungslinie zwischen den beiden Kameras die Messachse schneidet und die Strecke zwischen der Messachse und der ersten Kamera im Wesentlichen identisch mit der Strecke zwischen der Messachse und der zweiten Kamera ist.

In speziellen Ausführungsformen kann der Lasertracker erfindungsgemäss eine dritte oder mehrere Kameras mit einem dritten oder mehreren positionssensitiven Detektoren zur Erfassung einer dritten oder mehreren Zielpositionen aufweisen. Die dritte oder mehreren Kameras können derart angeordnet sein, dass eine dritte oder mehrere optische Achsen der dritten oder mehreren Kameras versetzt zur Messachse angeordnet sind. Die Steuerungs- und Auswerteeinheit kann dabei derart konfiguriert sein, dass bei Ausführung der Suchfunktionalität das Suchen des Ziels in Abhängigkeit von den drei oder mehreren Zielpositionen erfolgt, insbesondere wobei zumindest eine der Kameras zur Erfassung elektromagnetischer Strahlung in einem definierten Bereich um eine Beleuchtungswellenlänge der Beleuchtungsstrahlung ausgebildet ist.

Derartige Ausführungen können beispielsweise hinsichtlich einer Redundanz der Suchfunktionalität, z.B. bei Ausfall einer oder mehrerer Kameras, oder zur Steigerung der Genauigkeit bei der Ziellokalisierung realisiert sein.

Hinsichtlich des Anzielen des Ziels (z.B. nachfolgend auf das Auffinden des Ziels) mittels der Messstrahlung kann die Strahllenkeinheit erfindungsgemäss vermittels der Steuerungs- und Abzieleinheit derart steuerbar sein, dass die Messstrahlung in Abhängigkeit von der ersten und zweiten Zielposition ausgerichtet wird, insbesondere automatisch, insbesondere in Abhängigkeit von der Grobposition des Ziels, sodass die Messstrahlung auf das Ziel trifft und mittels der Feindistanzmesseinheit die Distanz zum Ziel präzise bestimmbar ist.

Durch das Auffinden des Ziels mittels der beschriebenen Suchfunktionalität kann die Messstrahlung direkt auf das Ziel ausgerichtet, an diesem zurück reflektiert und die Entfernung zum Ziels exakt bestimmt werden. Zur Entfernungsmessung können hierfür sowohl eine Absolutdistanzmesseinheit und ein Interferometer im Tracker angeordnet sein, wobei für beide Messeinheiten jeweils eine Strahlquelle vorgesehen sein kann und die emittierten Strahlungen sich entlang eines gemeinsamen Messpfads und schliesslich auf einer gemeinsamen Messachse ausbreiten können.

Das Ausrichten der Messstrahlung erfolgt in zwei Achsen (Stehachse bzw. vertikale Achse und Neigungsachse bzw. Kippachse) mittels an dem Lasertracker zum Schwenken der Strahllenkeinheit vorgesehenen Motoren, insbesondere Stellmotoren, wobei diese vermittels der Steuerungs- und Abzieleinheit ansteuerbar sein können.

Ein weiterer Aspekt der Erfindung betrifft die strukturelle Ausgestaltung des Lasertrackers. Erfindungsgemässe kann der Lasertracker eine um die Stehachse relativ zur Basis motorisiert schwenkbare und die Neigungsachse bzw. eine horizontale oder liegende Achse definierende Stütze und eine als Strahllenkeinheit ausgebildete, um die Neigungsachse relativ zur Stütze motorisiert schwenkbare Anzieleinheit mit einer Teleskopeinheit zur Emission der Messstrahlung und zum Empfang von zumindest einem Teil der am Ziel reflektierten Messstrahlung aufweisen.

Ferner betrifft die Erfindung ein Verfahren zum Suchen eines Ziels mit einem Lasertracker, wobei der Lasertracker eine eine Stehachse definierende Basis und eine Strahllenkeinheit zum Emittieren einer Messstrahlung und zum Empfangen von zumindest einem Teil der am Ziel reflektierten Messstrahlung aufweist, wobei die Strahllenkeinheit um die Stehachse und eine Neigungsachse relativ zur Basis motorisiert schwenkbar ist und durch eine Emissionsrichtung der Messstrahlung eine Messachse definiert ist. Weiters erfolgt ein Beleuchten des Ziels mit elektromagnetischer Beleuchtungsstrahlung und ein positionssensitives Erfassen eines ersten Bildes mit einer ersten am Lasertracker angeordneten und ein erstes Sichtfeld definierenden Kamera, wobei die erste Kamera mit deren optischer Achse versetzt zur Messachse angeordnet ist. Zudem erfolgt ein erstes Bestimmen von zumindest einem Teil der am Ziel reflektierten Beleuchtungsstrahlung als erste Zielposition im ersten Bild.

Im Rahmen des Verfahrens erfolgt ausserdem ein positionssensitives Erfassen eines zweiten Bildes mit einer zweiten am Lasertracker angeordneten und ein zweites Sichtfeld definierenden Kamera und ein zweites Bestimmen von zumindest einem Teil der am Ziel reflektierten Beleuchtungsstrahlung als zweite Zielposition im zweiten Bild. Die zweite Kamera ist dabei mit relativ zur ersten Kamera bekannter und fixer Kamerapositionierung derart angeordnet ist, dass die Sichtfelder der ersten und zweiten Kamera zumindest teilweise überlappen und die zweite Kamera mit deren optischer Achse versetzt zur Messachse angeordnet ist. Ein Auffinden des Ziels erfolgt in Abhängigkeit von der ersten und zweiten Zielposition.

Das erfindungsgemässe Verfahren kann gemäss den abhängigen Ansprüchen 11-14 sowie gemäss den oben beschriebenen Ausführungsformen und Weiterbildungen des erfindungsgemässen Lasertrackers, insbesondere in analoger Weise, weitergebildet werden.

Insbesondere können Vieldeutigkeiten, die bei einem Heranziehen von nur der ersten Zielposition zum Auffinden des Ziels und durch eine durch die Messachse und die optischen Achsen der ersten und der zweiten Kamera gegebene Parallaxe vorhanden sind, durch ein gemeinsames Heranziehen von sowohl der ersten als auch der zweiten Zielposition aufgelöst werden.

Ferner kann in Abhängigkeit von der ersten und zweiten Zielposition eine Grobentfernung zum Ziel bestimmt werden. Ausserdem kann in Abhängigkeit von der ersten und zweiten Zielposition jeweils eine Zielrichtung zum Ziel abgeleitet und in Abhängigkeit von den Zielrichtungen eine Grobposition des Ziels bestimmt werden, insbesondere mittels Photogrammetrie.

Hinsichtlich des Ausrichtens der Messstrahlung kann die Strahllenkeinheit in Abhängigkeit von der ersten und zweiten Zielposition ausgerichtet werden, insbesondere automatisch, insbesondere in Abhängigkeit der Grobposition des Ziels, sodass die Messstrahlung auf das Ziel trifft und mittels der Feindistanzmesseinheit die Distanz zum Ziel präzise bestimmbar ist.

Insbesondere kann zumindest ein positionssensitives Erfassen derart erfolgen, dass ausschliesslich elektromagnetische Strahlung in einem definierten Bereich um eine Beleuchtungswellenlänge der Beleuchtungsstrahlung erfasst wird.

Die Erfindung betrifft des Weiteren ein Computerprogrammprodukt mit Programmcode, der auf einem maschinenlesbaren Träger gespeichert ist, zur Steuerung bzw. Durchführung des erfindungsgemässen Verfahrens.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: zwei Ausführungsformen für erfindungsgemässe Lasertracker und ein Messhilfsinstrument;
- Fig. 2: eine weitere Ausführungsform eines erfindungsgemässen Lasertrackers;
- Fig. 3a-d: vier weitere erfindungsgemässe Ausführungsformen einer Anzieleinheit eines erfindungsgemässen Lasertrackers;
- Fig. 4: eine erste Ausführungsform eines optischen Aufbaus eines erfindungsgemässen Lasertrackers;
- Fig. 5a-b: zwei positionssensitive Detektoren mit erfassten Zielpositionen und ein erfindungsgemässes Auffinden des Ziels; und
- Fig. 6: einen geometrischen Ansatz für eine Methode zum Auffinden des Ziels.

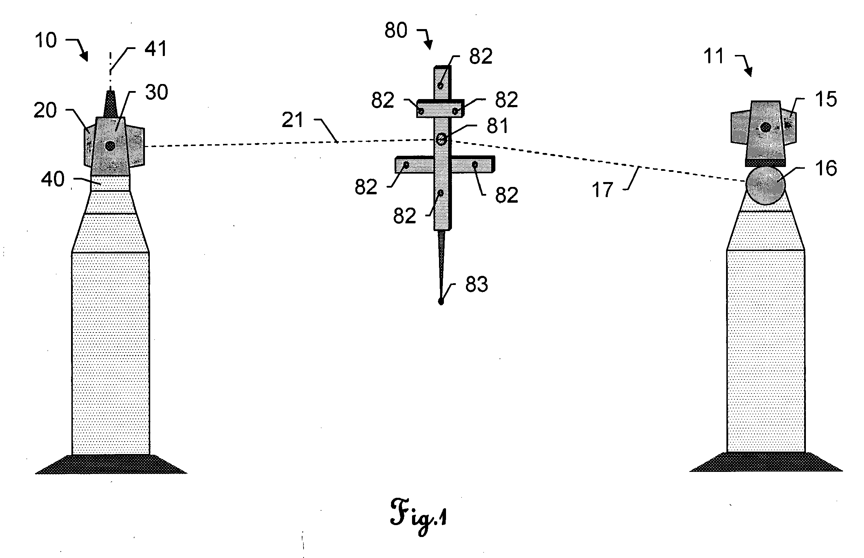

Figur 1 zeigt zwei Ausführungsformen für erfindungsgemässe Lasertracker 10,11 und ein Messhilfsinstrument 80, z.B. ein. taktiles Messgerät. Der erste Lasertracker 10 weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 derart an der Stütze 30 angeordnet, dass die Anzieleinheit 20 relativ zur Stütze 30 um eine Neigungsachse (Transitachse) schwenkbar ist. Durch eine so um zwei Achsen bereitgestellte Ausrichtungsmöglichkeit der Anzieleinheit 20 kann ein von dieser Einheit 20 emittierter Laserstrahl 21 flexibel ausgerichtet und damit Ziele angezielt werden. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 21 auf eine Reflektor 81 am Messhilfsinstrument 80 gerichtet und wird an diesem zurück zum Lasertracker 10 retro-reflektiert. Mittels dieses Messlaserstrahls 21 kann eine Entfernung zum Reflektor 81, insbesondere mittels Laufzeitmessung, mittels des Phasenmessprinzips oder mittels des Fizeau-Prinzips, bestimmt werden. Der Lasertracker 10 verfügt über eine Feindistanzmesseinheit zur Bestimmung dieser Entfernung zwischen dem Tracker 10 und dem Reflektor 81 und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Anzieleinheit 20, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 80 einen taktilen Sensor auf, dessen Kontaktpunkt 83 mit einem zu vermessenden Zielobjekt in Kontakt gebracht werden kann. Während dieser Kontakt zwischen dem Tastwerkzeug 80 und dem Zielobjekt besteht können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Reflektor 81 und zu am Messhilfsinstrument 80 angeordneten Markierungen 82, die beispielsweise als Leuchtdioden ausgebildet sein können. Alternativ können die Markierungen 82 auch derart ausgebildet sein, dass diese bei einem Beleuchten, z.B. mit Strahlung einer definierten Wellenlänge, die auftreffende Strahlung reflektieren (als Retroreflektoren ausgebildete Hilfspunkt-Markierungen 82), insbesondere eine bestimmte Leuchtcharakteristik zeigen, oder dass diese ein definiertes Muster oder Farbkodierung aufweisen. Aus der Lage bzw. Verteilung der Markierungen 82 in einem mit dem Sensor der Bilderfassungseinheit erfassten Bild kann somit eine Orientierung des Tastwerkzeugs 80 bestimmt werden.

Der zweite Lasertracker 11 weist eine von der Bilderfassungseinheit 15 separierte Strahlführungseinheit 16 zur Emission eines zweiten Laserstrahls 17 auf, welcher ebenfalls auf den Reflektor 81 ausgerichtet ist. Sowohl der Laserstrahl 17 als auch die Bilderfassungseinheit 15 sind jeweils um zwei Achsen motorisiert schwenkbar und können dadurch derart ausgerichtet werden, dass mittels der Bilderfassungseinheit 15 das mit dem Laserstrahl 17 angezielte Ziel 81 und die Markierungen 82 des Messhilfsinstruments 80 erfasst werden können. Somit können auch hier eine präzise Entfernung zum Reflektor 81 und eine Orientierung des Instruments 80 anhand der räumlichen Lage der Markierungen 82 bestimmt werden.

Zur jeweiligen Ausrichtung der Laserstrahlen 17,21 auf den Reflektor 81 sind an den Lasertrackern 10,11 jeweils Beleuchtungsmittel zur Beleuchtung des Reflektors 81 mit Strahlung einer bestimmten Wellenlänge, insbesondere im infraroten Wellenlängenbereich, vorgesehen und zusätzliche zumindest zwei Kameras mit positionssensitiven Detektoren an jedem Tracker 10,11 angeordnet. Die an dem Reflektor 81 reflektierte und zum Lasertracker 10,11 rückgestrahlte Beleuchtungsstrahlung kann mittels der Kameras detektiert und mit jedem der positionssensitiven Detektoren eine Position des Reflektors 81 auf dem jeweiligen Detektor abgebildet werden. Somit können sowohl mit dem ersten Lasertracker 10 als auch mit dem zweiten Lasertracker 11 zwei abgebildete Positionen des Reflektors bestimmt und in Abhängigkeit dieser abgebildete Zielpositionen das Ziel (Reflektor 81) aufgefunden - z.B. nach allgemein bekannten Prinzipien der Photogrammetrie - und die Anzieleinheit 20 bzw. die Strahlführungseinheit 16 derart ausgerichtet werden, dass das Ziel mit dem Messstrahl 17,21 angezielt wird.

Zudem kann auf Basis jeweils zweier Bilder eines Lasertrackers 10,11 jeweils eine Grobposition des Reflektors bestimmt werden. Diese Position kann nach allgemeinen geometrischen bzw. trigonometrischen Grundsätzen, beispielsweise nach geometrischen Konstruktionsprinzipien von Dreiecken oder mittels Sinus- und/oder Kosinussatz, bestimmt werden. Ausserdem können zu der Grobpositionsbestimmung allgemein bekannte Methoden der Photogrammetrie (Stereophotogrammetrie) eingesetzt werden. Hierfür sind zudem die relativen Positionen und insbesondere Ausrichtungen der Kameras am jeweiligen Tracker 10,11 zueinander bekannt.

Die Beleuchtungsmittel und die Kameras können in diesem Zusammenhang z.B. an der Bilderfassungseinheit 15, der Strahlführungseinheit 16, der Anzieleinheit 20, der Stütze 30 oder der Basis 40 in jeweils definierten Positionen angeordnet sein.

Mittels der Kenntnis der Positionierung der Kameras relativ zu einer Emissionsrichtung des jeweiligen Laserstrahls 17,21 kann der Laserstrahl 17,21 auf die ermittelte Grobposition des Reflektors 81 ausgerichtet und an diesen angekoppelt werden (lock-on). Dadurch kann trotz eines konstruktiv bedingten Versatzes der Lasermissionsrichtung zu den Erfassungsrichtungen der Kameras eine schnelle Ausrichtung des jeweiligen Strahls 17,21 erfolgen und eine durch die optischen Achsen der Kameras und den Laserstrahl 17,21 gegebene Parallaxe aufgelöst werden. Im Speziellen kann der Laserstrahl 17,21 direkt, d.h. ohne einen iterativen Zwischenschritt, auf das Ziel 81 ausgerichtet werden.

Insbesondere kann - alternativ oder zusätzlich zur Bestimmung der Grobposition des Reflektors 81 - aus den auf den Detektoren (an einem Lasertracker 10,11) erfassten und abgebildeten Zielpositionen eine Grobentfernung zum Reflektor 81 bestimmt werden. Auch diese Bestimmung kann mittels allgemein gültiger geometrischer Grundsätze erfolgen, z.B. mittels des Höhensatzes für Dreiecke und/oder mittels Sinus- und/oder Kosinussatz.

Ausserdem kann ein erfindungsgemässes Ausrichten des Laserstrahls 17,21 auch bei Lasertrackern ohne Bilderfassungseinheit 15 zur Orientierungsbestimmung (6-DoF Kamera) eines Messhilfsinstruments 80 Anwendung finden (3D-Lasertracker).

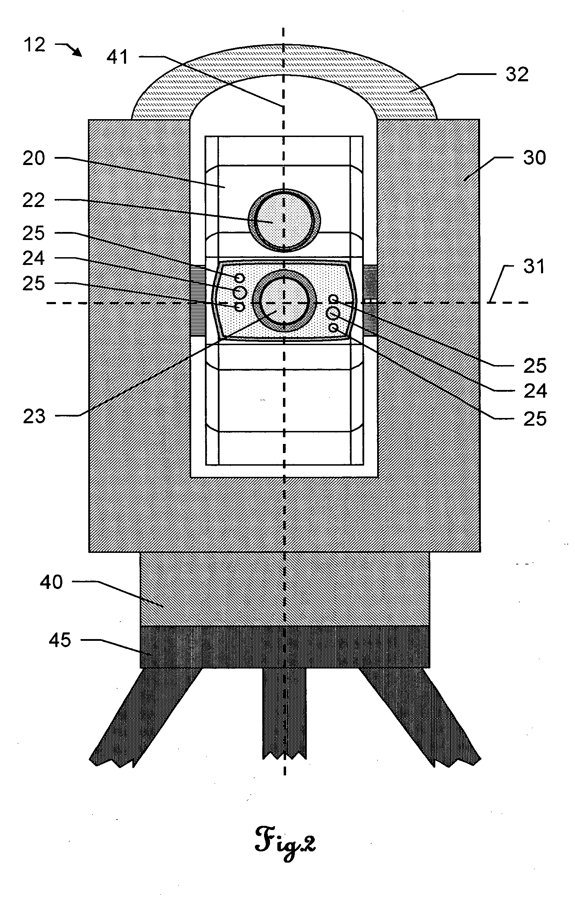

Figur 2 zeigt eine weitere Ausführungsform eines erfindungsgemässen Lasertrackers 12 mit einer Basis 40, die auf einem Stativ 45 angeordnet ist und eine Schwenkachse 41 definiert. Auf der Basis ist zudem eine eine Neigungsachse 31 definierende, um die Schwenkachse 41 relativ zur Basis 40 schwenkbare Stütze 30 mit einem Griff 32 angeordnet. Weiters ist eine Anzieleinheit 20 vorgesehen, wobei diese Anzieleinheit 20 um die Neigungsachse 31 relativ zur Stütze 30 schwenkbar verbaut ist.

Die Anzieleinheit 20 weist ferner eine Variokamera mit einem Variokameraobjektiv 22 und eine Optik 23 auf, die einer in der Anzieleinheit 20 angeordneten Entfernungsmess- und Trackingeinheit zugeordnet ist, wobei vermittels der Optik 23 ein Messlaserstrahl von der Entfernungsmess- und Trackingeinheit zur präzisen Bestimmen einer Entfernung zu einem Ziel und zum Verfolgen des Ziels emittiert wird. Ausserdem sind an der Anzieleinheit 20 zwei Kameras 24 mit jeweils einer Kameraoptik und mit jeweils einem positionssensitiven Detektor und zudem Beleuchtungsmittel 25, welche beispielsweise als LEDs ausgebildet sind und im Betrieb insbesondere Licht im Infrarotbereich emittieren, vorgesehen. Mit diesen Beleuchtungsmitteln 25 kann somit ein Ziel, z.B. ein Reflektor, beleuchtet bzw. angestrahlt werden und zumindest eine Teil der Strahlung durch den Reflektor in Richtung des Lasertrackers 12 bzw. in Richtung der Kameras 24 zurückreflektiert werden. Das reflektierte Licht wird dann mit den Kameras 24 erfasst und vermittels der Kameraoptiken auf dem jeweiligen positionssensitiven Detektor als jeweilige erste und zweite Zielposition abgebildet. Hieraus kann nun für jede dieser Zielpositionen unter Berücksichtigung der Ausrichtung der Detektoren jeweils eine Richtung zur Zielposition und somit ein Versatz relativ zu einer Nullposition auf dem jeweiligen Detektor und/oder ein Richtungswinkel, insbesondere zwei Richtungswinkel für zwei Detektorachsen, z.B. für eine durch die Dimensionierung des Detektors vordefinierte X- und Y-Achse, bestimmt werden. Mittels dieser so erfassten Positionen des Ziels kann ein automatisiertes Auffinden des Ziels erfolgen. Das Auffinden des Ziels kann insbesondere mittels Stereophotogrammetrie erfolgen.

In Abhängigkeit der mittels der zwei Detektoren bestimmten Richtungswinkeln kann dann anhand der bekannten relativen Positionierung der Kameras 24 eine Grobposition des Ziels und/oder eine Grobentfernung zum Ziel, beispielsweise mittels einer mathematisch geometrischen Dreiecks-Konstruktion, grob bestimmt werden.

Mit den bekannten Ausrichtungen der Kameras 24 relativ zur Messrichtung des Messlaserstrahls, welche mittels an der Stahlführungseinheit 16 angeordneter Winkelmesser bzw. mittels an der Basis 40, der Stütze 30 und/oder Anzieleinheit 20 angeordneter Winkelmesser bestimmt werden kann, kann die bestimmte Grobposition bzw. Grobentfernung derart im Lasertracker 12, insbesondere mittels der Steuerungs- und Auswerteeinheit, verarbeitet werden, dass der Messlaserstrahl auf die bestimmte Grobposition und damit auf das Ziel ausrichtbar ist.

Nachdem der Laserstrahl auf den Reflektor 81 ausgerichtet ist und von diesem zurückreflektiert wird, kann mittels einer Feindistanzmesseinheit im Lasertracker 12 bzw. in der Anzieleinheit 20 eine präzise Entfernung zum Reflektor 81 bestimmt werden. Ferner kann der Laserstahl dann an den Reflektor 81 (Retroreflektor) angekoppelt werden und der Reflektor 81 mit dem Strahl verfolgt werden. Hierfür werden auf einem weiteren, dem Strahlengang der Messstrahlung zugeordneten Positionssensor eine Position des reflektierten Messstrahls auf dem Sensor und eine Ablage der auftreffenden Strahlung bezüglich einer Nullpunktposition bestimmt. Mittels dieser Ablage, welche auf dem Sensor in zwei Richtungen bestimmbar ist, kann eine Positionsänderung des Reflektors 81 detektiert und der Laserstrahl entsprechend dieser Änderung nachgeführt und somit fortlaufend der Reflektor 81 angezielt werden.

Die Kameras 24 (mit Kameraoptiken und Detektoren) sind so angeordnet, dass die Sichtfelder der Kameras 24 sich zumindest teilweise überlappen (überschneiden) und das Ziel somit in den Sichtfeldern beider Kameras 24 erfassbar ist, insbesondere mit beiden Kameras 24 gleichzeitig erfassbar ist. Dabei kann die erste Kamera ein grosses Sichtfeld aufweisen, wobei die zweite Kamera ein Sichtfeld aufweisen kann, welches vergleichsweise kleiner ist. Somit können zum einen ein grosser Bereich (mittels der ersten Kamera) erfasst und zugleich eine hohe Genauigkeit bei der Zielpositionsbestimmung (mittels der zweiten Kamera) realisiert werden. Alternativ können beide Kameras 24 ein grosses Sichtfeld aufweisen, damit ein möglichst grosser Überlappungsbereich generierbar ist (bei geringerer Messgenauigkeit), oder beide Kameras 24 mit einem engen Sichtfeld ausgeführt sein, damit eine gesteigerte Genauigkeit bei der Grobpositionsbestimmung erreicht wird (bei kleinerem Überlappungsbereich und damit kleinerem Messbereich).

In der gezeigten Ausführungsform sind die Kameras 24 derart an der Anzieleinheit 20 angeordnet, dass deren Erfassungsrichtungen weder in einer Ebene, die durch die Schwenkachse 41 und den Mittelpunkt der Optik 23 definiert ist, noch in einer Ebene, die durch die Neigungsachse 31 und den Mittelpunkt der Optik 23 definiert ist, liegen, jedoch kann zumindest eine der Kameras in einer alternativen Ausführungsform in einer der entsprechenden Ebenen angeordnet sein.

In einer speziellen Ausführungsform eines erfindungsgemässen Lasertrackers kann das reflektierte Beleuchtungslicht mit mindestens drei Kameras detektiert und somit drei Zielpositionen auf drei positionssensitiven Detektoren und entsprechende Richtungswinkel bestimmt werden. Eine Bestimmung der Grobposition ergibt sich dann in Abhängigkeit der abgebildeten drei Zielpositionen auf den Detektoren.

In einer speziellen Ausführungsform des Lasertrackers 12 kann in Abhängigkeit der durch die reflektierte Beleuchtungsstrahlung abgebildeten Zielpositionen auf den Detektoren mittels mathematisch geometrischer Berechnungsmethoden eine Grobentfernung zum Ziel abgeleitet werden.

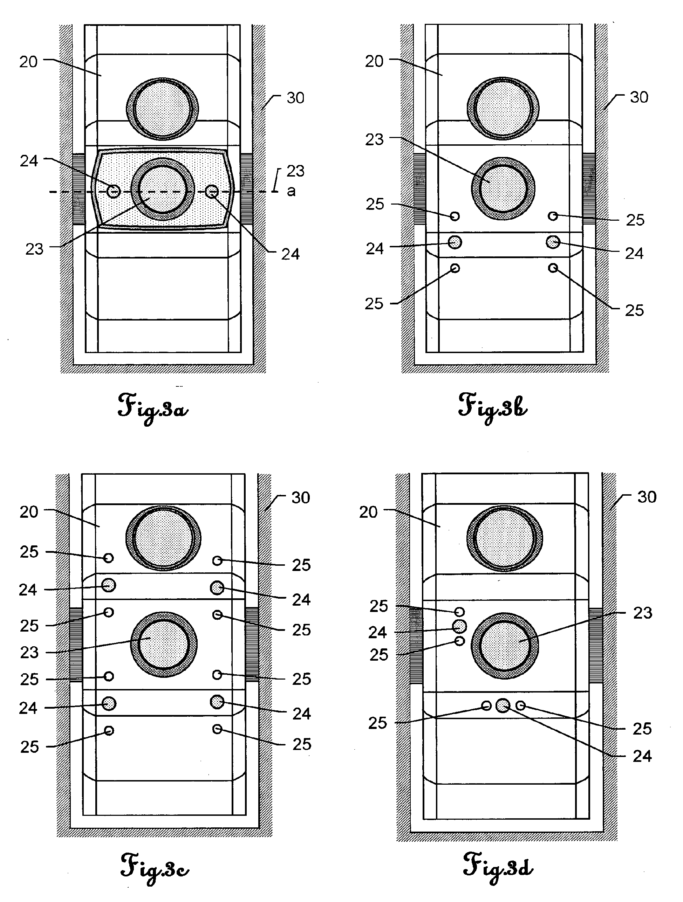

Die Figuren 3a, 3b und 3c zeigen jeweils eine weitere Ausführungsform einer erfindungsgemässen Anzieleinheit 20 eines Lasertrackers. Die Anzieleinheiten 20 sind wiederum um eine Neigungsachse schwenkbar relativ zu einer Stütze 30 angeordnet und weisen eine Optik 23 einer Teleskopeinheit zur Emission einer Messstrahlung und zur präzisen Bestimmung einer Entfernung zu einem Ziel vermittels der Messstrahlung auf. Die Ausführungsformen unterscheiden sich durch die jeweilige Anordnung und/oder Anzahl der vorgesehenen Kameras 24 und Beleuchtungsmittel 25, die z.B. als LEDs ausgebildet sind.

In Figur 3a sind zwei Kameras 24 auf einer gemeinsamen Achse 23a durch den Mittelpunkt der Teleskopoptik 23 angeordnet. Mit den Kameras 24 kann gemäss oben beschriebener Vorgehensweise ein Ziel auf einem jeweiligen Detektor erfasst, mittels weiterer Verarbeitungsschritte aufgefunden und durch eine Ausrichtung der Anzieleinheit 20 mit dem Messstrahl angezielt werden. Die Richtung, in der jede der Kameras 24 einen Reflektor sieht weicht von derjenigen Richtung ab, die für den Messstrahl eingestellt werden muss, um den Reflektor zu treffen. Um diese Abweichung zu ermitteln, kann eine Grobentfernung mit Hilfe des parallaktischen Winkels, der aus den Sichtrichtungen der Kameras 24 zum Reflektor abgeleitet werden kann, bestimmt werden.

Figur 3b zeigt ebenfalls zwei Kameras 24, welche versetzt unterhalb der Optik 23 angeordnet sind, und vier Beleuchtungsmittel 25, die zur Beleuchtung des Ziels dienen. Die Beleuchtungsmittel 25 sind hier jeweils symmetrisch um die jeweilige Kamera 24 angeordnet. Auch mit dieser erfindungsgemäßen Ausführungsform lässt sich ein Auffinden eines reflektierenden Ziels anhand zweier mit den Kameras 24 erfasster Bilder durchführen. Durch den Versatz der optischen Achsen der Kameras 24 relativ zum Mittelpunkt der Teleskopoptik 23, durch welchen im Wesentlichen der Messstrahl der Anzieleinheit 20 emittiert wird, kann das Auffinden hier im Speziellen durch die Bestimmung einer Grobentfernung zum Ziel aus den beiden erfassten Bildern (Photogrammetrie) realisiert werden. Hierzu kann beispielsweise mittels geometrischer Berechnungsgrundsätze eine Höhe eines durch die Kamerapositionen und das Ziel definierten Dreiecks bestimmt werden. Zudem kann mit einer zusätzlichen Berücksichtigung der Richtungen zum Ziel eine Grobposition des Ziels bestimmt werden. Die Richtungen zum Ziel können dabei aus den erfassten Bildern abgeleitet werden.

Die Figur 3c zeigt eine weitere erfindungsgemässe Ausführungsform der Anzieleinheit 20 mit vier Kameras 24, welchen jeweils zwei Beleuchtungsmittel 25 zur Beleuchtung eines Ziels zugeordnet sind. Die Kameras 24 sind dabei in einem definierten Positionsverhältnis relativ zu einer Messachse, deren Lage durch die Optik 23 definiert ist, angeordnet. Durch die grössere Anzahl von Kameras 24 und die damit erfassbaren Bilder eines gemeinsamen reflektierenden Ziels kann das Auffinden des Ziels mittels dieser Bilder genauer erfolgen und somit ein schnelleres Anzielen des Ziels mit der Messstrahlung erreicht werden. Ausserdem bietet diese Ausführungsform den Vorteil der Redundanz, d.h. sollte eine (oder zwei) der Kameras 24 ausfallen, so kann das Ziel immer noch mittels der verbleibend funktionierenden Kameras 24 aufgefunden werden. Ein weiterer Vorteil durch eine derartige Anordnung der Kameras 24 ist ein dadurch entstehendes vergrössertes Gesamtsichtfeld, das sich aus der teilweisen Überschneidung der jeweiligen Kamerasichtfelder ergibt. Insbesondere kann somit eine gesteigerte Genauigkeit hinsichtlich der Zielauffindung bzw. Zielpositionsbestimmung erreicht werden, im Speziellen in einem Bereich um die Messachse. Dafür können sich die vier Kamerasichtfelder in diesem Bereich gemeinsam überlappen. Durch die grössere Anzahl von Kameras 24 und die damit erfassbaren Bilder eines gemeinsamen reflektierenden Ziels kann, neben dem genaueren Auffinden des Ziels mittels dieser Bilder, ein schnelleres Anzielen des Ziels mit der Messstrahlung erreicht werden.

Die Figur 3d zeigt eine weitere erfindungsgemässe Ausführungsform der Anzieleinheit 20 mit zwei Kameras 24, welchen jeweils zwei Beleuchtungsmittel 25 zur Beleuchtung eines Ziels zugeordnet sind. Die Kamera-Beleuchtungsmittel-Kombinationen sind hierbei asymmetrisch um die Teleskopoptik 23 angeordnet sind. Eine erste diese Kombinationen ist seitlich und die zweite unterhalb der Teleskopoptik 23 angeordnet.

Die Kameras 24 sind dabei wiederum im Wesentlichen jeweils paarweise achsensymmetrisch zur Messrichtung, deren Lage durch den Mittelpunkt der Optik 23 definiert ist, angeordnet. Durch die grössere Anzahl von Kameras 24 und die damit erfassbaren Bilder eines gemeinsamen reflektierenden Ziels kann das Auffinden des Ziels mittels dieser Bilder genauer erfolgen und somit ein schnelleres Anzielen des Ziels mit der Messstrahlung erreicht werden. Mittels der spezifischen Anordnung der Beleuchtungsmittel 25 an der Anzieleinheit 20 kann auch mit dieser Ausführung ein erfindungsgemässes Auffinden des Ziels erfolgen.

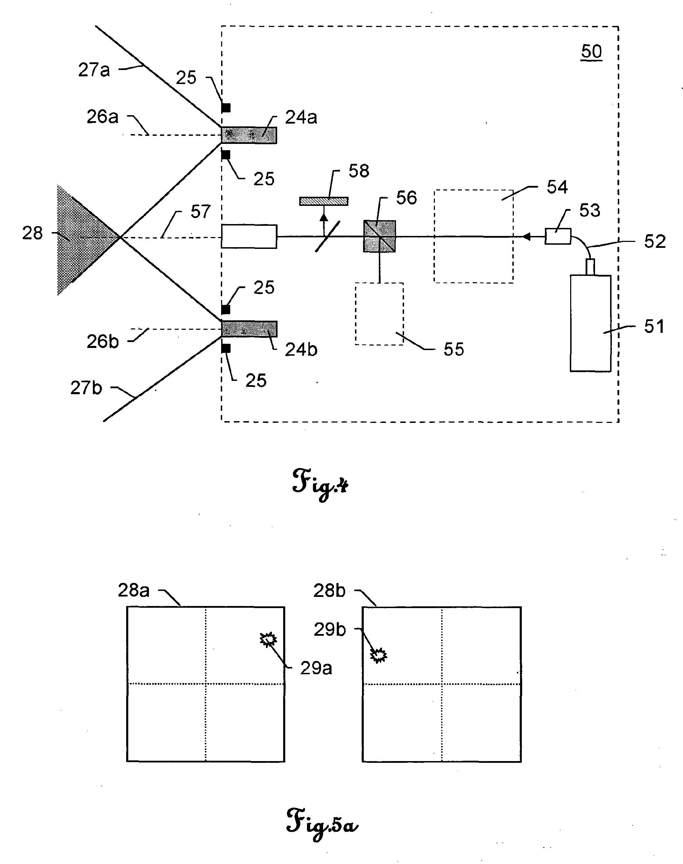

Figur 4 zeigt eine Ausführungsform eines optischen Aufbaus eines erfindungsgemässen Lasertrackers. Eine optische Einheit 50 des Lasertrackers weist dabei eine Laserstrahlquelle 51 - beispielsweise eine HeNe-Laserquelle oder eine Laserdiode - und einen Kollimator 53 zur Einkopplung der mit der Strahlquelle 51 erzeugten Laserstrahlung in den Messstrahlengang auf. Die Strahlung wird im gezeigten Aufbau mittels einer optischen Faser 52 von der Laserstrahlquelle 51 zum Kollimator 53 geführt, kann aber alternativ auch direkt oder durch optische Umlenkmittel in den Messstrahlengang eingekoppelt werden. Die optische Einheit 50 verfügt zudem über eine Interferometereinheit 54 mittels deren Entfernungsänderungen zum Ziel detektiert und gemessen werden können. Die mit der Strahlquelle 51 erzeugte Strahlung wird als Messstrahlung für das Interferometer 54 benutzt, im Interferometer 54 in einen Referenzpfad und Messpfad aufgespaltet und nach Reflexion des Messstrahls am Ziel zusammen mit dem Referenzstrahl an einem Detektor detektiert. Ausserdem ist eine Absolutdistanzmesseinheit 55 mit einer weiteren Strahlquelle und einem weiteren Detektor vorgesehen. Diese Einheit 55 dient zur Distanzbestimmung zum Ziel, wobei die damit erzeugte Strahlung vermittels eines Strahlteilers 56 zusammen mit der Interferometerstrahlung auf einen gemeinsamen Messstrahlengang geführt wird. Die Anordnung der optischen Bauteile und die Führung der Messstrahlung in der optischen Einheit 50 definierten eine Messrichtung bzw. eine optische Messachse 57. Für eine präzise Bestimmung einer Entfernung zum Ziel können Messwerte von sowohl Absolutdistanzmesser 55 und Interferometer 54 berücksichtigt und insbesondere verknüpft werden. In einer speziellen Ausführungsform eines Lasertrackers können Absolutdistanzmesser 55 und Interferometer 54 unterschiedliche Messstrahlengänge definieren und/oder baulich separiert, insbesondere in unterschiedlichen Messgruppen, angeordnet sein.

Die optische Einheit 50 weist ferner zwei Kameras 24a,25a mit einer jeweiligen optischen Achse bzw. Erfassungsrichtung 26a,26b und Beleuchtungsmittel 25 auf. Des Weiteren definiert jede der Kameras 24a,24b ein Sichtfeld 27a,27b, wobei die Kameras 24a,25a derart angeordnet sind, dass die Sichtfelder 27a,27b überlappen und somit ein Überlappungsbereich 28 festgelegt ist.

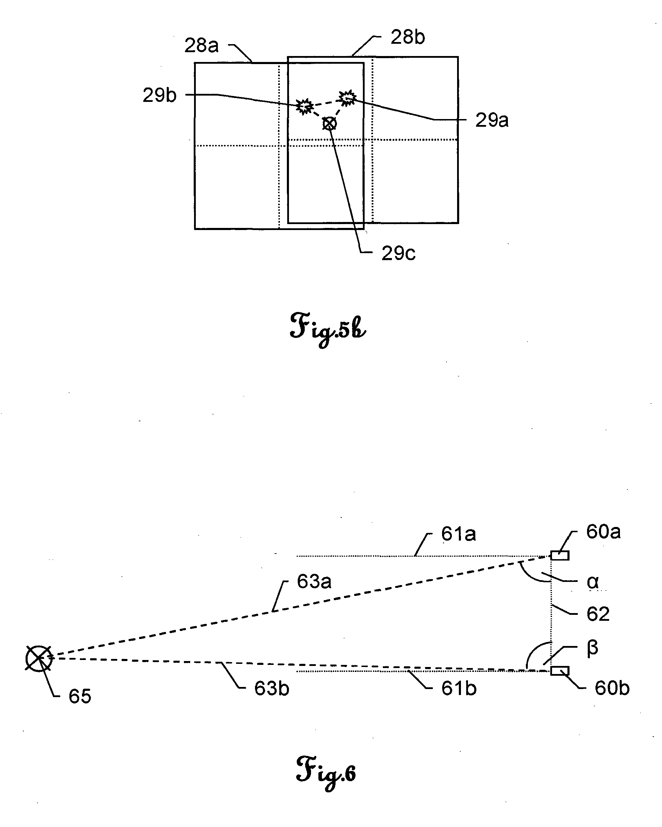

Mittels der Beleuchtungsmittel 25 kann elektromagnetische Strahlung zur Beleuchtung des Ziels emittiert werden. Wird diese Strahlung am Ziel reflektiert und zumindest teilweise in Richtung der beiden Kameras 24a,24b reflektiert, kann die reflektierte Beleuchtungsstrahlung mit beiden Kameras 24a,24b in jeweils einem Bild als Zielposition erfasst werden. Durch die derartige Anordnung der Kameras 24a,24b, dass ein überlappender Sichtbereich 28 vorliegt, kann das Ziel in diesem Bereich 28 mit beiden Kameras 24a,24b erfasst werden. Eine beispielhafte Ausführung eines Zielerfassens und eines Auffinden des Ziels mittels erfasster Bilder ist in den Figuren 5a und 5b gezeigt.

Zudem ist in der optischen Einheit 50 ein positionssensitiver Detektor 58 (PSD) derart angeordnet, dass am Ziel reflektierte Messlaserstrahlung auf diesem detektiert werden kann. Mittels dieser PSD 58 kann eine Ablage des erfassten Strahls aus einem Detektornullpunkt bestimmt und auf Basis der Ablage ein Nachführen des Laserstahls auf das Ziel erfolgen. Zu diesem Zweck und zum erreichen einer hohen Genauigkeit ist das Sichtfeld dieser PSD 58 möglichst klein, d.h. korrespondierend zum

Strahldurchmesser Messlaserstrahls, gewählt. Eine Erfassung mit der PSD 58 erfolgt koaxial zur Messachse 57, sodass die Erfassungsrichtung der PSD 58 der Messrichtung entspricht. Die Anwendung des PSD-basierten Trackings und der Feinanzielung kann erst erfolgen, nachdem der Messlaser auf das retro-reflektierende Ziel anhand der Bilderfassung der beiden Kameras 24a,24b und einer photogrammetrischen Auswertung der Bilder ausgerichtet worden ist.

Die Figur 5a zeigt zwei positionssensitive Detektoren 28a,28b, wobei auf jeden Detektor eine Zielposition 29a,29b abgebildet ist. Die Zielpositionen 29a,29b können durch einen Reflex von Beleuchtungsstrahlung am Ziel mit den Detektoren 28a,28b zweier Kameras erfasst werden. Hierbei können zwei Bilder erzeugt werden, welche jeweils eine Zielposition 29a,29b zeigen und somit eine relative Richtung jedes Detektors 28a,28b zum Ziel angeben bzw. eine Abweichung der Zielpositionen 29a,29b von einem Detektornullpunkt anzeigen.

Figur 5b zeigt eine Überlagerung der mit den Detektoren 28a,28b erzeugten Bilder mit den Zielpositionen 29a,29b. Die erfassten Zielpositionen 29a,29b sind hierbei in ein gemeinsames, relativ zur Messeinheit des Lasertrackers referenziertes Koordinatensystem übertragen. Das Auffinden des Ziels 29c kann nun mittels einer (koordinativen) Auswertung der ersten Zielposition 29a und der zweiten Zielposition 29b erfolgen, wobei beispielsweise eine Verbindungsstrecke zwischen den Positionen 29a,29b konstruiert und daraus eine Zielkoordinate bestimmt werden kann. Eine solche Bestimmung kann insbesondere bei einer achsensymmetrischen Verteilung der Detektoren 28a,28b um eine Teleskopoptik bzw. um die Messachse erfolgen. Mit der bekannten und fixen relativen Positionierung der Kameras bzw. Detektoren 28a,28b zueinander kann in Folge eine Grobentfernung zum Ziel und/oder eine Grobposition des Ziels berechnet werden.

Auf Basis dieser Ziellokalisation und mit bekannter Positionierung der Kameras zur Messeinheit (Interferometer und Absolutdistanzmesser) bzw. zu deren Emissionsrichtung kann ferner der Messlaserstrahl des Lasertrackers auf die Position des Ziels ausgerichtet und eine präzise Entfernung zum Ziel bestimmt werden.

Mit Hilfe einer derartigen Zielfindung kann das Anzielen des Ziels 29c effizienter, schneller und direkt erfolgen, wobei eine iterative Annäherung nach Methoden des Standes der Technik mehrere Schritte erfordert und somit zeitintensiver und ungenauer ist.

Die Bestimmung der Grobentfernung oder der Grobposition kann im Speziellen mittels Heranziehen geometrischer Rechengrundsätze erfolgen. Beispielhaft ist dies in Figur 6 verdeutlicht. Hier erfassen zwei Kameras 60a,60b jeweils das Ziel 65 und sind derart zueinander positioniert, dass eine Verbindungsstrecke 62 zwischen den Kameras 60a,60b, insbesondere hinsichtlich deren Länge, und die jeweiligen Erfassungsrichtungen 61a,61b der Kameras 60a,60b bekannt sind (photogrammetrische Basis). Aus den mit den Kameras 60a,60b erfassten Bildern kann jeweils eine Richtung 63a,63b zum Ziel bestimmt und somit ein Winkel α zwischen der Richtung 63a und der Verbindungsstrecke 62 und ein Winkel β zwischen der Richtung 63b und der Verbindungsstrecke 62 abgeleitet werden.

Auf Basis dieser bestimmten Angaben kann beispielsweise durch Heranziehen des "Höhensatzes für Dreiecke" (hₐ=c*sin β), der "Winkelsumme im Dreieck" (α+β+γ=180°) und des "Sinussatzes" (a/sin α = c/sin γ) eine Entfernung von der Verbindungsstrecke 62 zum Ziel 65 berechnet werden.

Es versteht sich, dass diese dargestellten Figuren nur mögliche Ausführungsbeispiele schematisch darstellen. Die verschiedenen Ansätze können erfindungsgemäss ebenso miteinander sowie mit photogrammetrischen Verfahren zur Bestimmung von Entfernungen und/oder Positionen und mit gattungsgemässen Messgeräten, insbesondere Lasertrackern, des Stands der Technik kombiniert werden.

## Patentansprüche

1. Lasertracker (10,11,12) zur fortlaufenden Verfolgung eines reflektierenden Ziels (29c,65,81) und zur Positionsbestimmung des Ziels (29c,65,81) mit
• einer eine Stehachse (41) definierenden Basis (40),
• einer Strahllenkeinheit zur Emission einer Messstrahlung (17,21) und zum Empfang von zumindest einem Teil der am Ziel (29c,65,81) reflektierten Messstrahlung (17,21), wobei
□ die Strahllenkeinheit um die Stehachse (41) und eine Neigungsachse (31) relativ zur Basis (40) motorisiert schwenkbar ist und
□ durch eine Emissionsrichtung der Messstrahlung (17,21) eine Messachse (57) definiert ist,
• einem mit seiner Erfassungsrichtung koaxial zur Messachse angeordneten positionssensitiven Detektor (58) zur Feinanzielung und Verfolgung des Ziels (29c,65,81) mittels Detektion von am Ziel (29c,65,81) reflektierter Messstrahlung (17,21),
• einer Feindistanzmesseinheit zur präzisen Distanzbestimmung zum Ziel (29c,65,81) vermittels der Messstrahlung (17,21),
• einer Winkelmessfunktionalität zur Bestimmung einer Ausrichtung der Strahllenkeinheit relativ zur Basis (40) und
• einer Zielsucheinheit mit
□ Beleuchtungsmitteln (25) zur Beleuchtung des Ziels (29c,65,81) mit elektromagnetischer Beleuchtungsstrahlung,
□ einer ersten ein erstes Sichtfeld (27a) definierenden Kamera (24,24a,60a) mit einem ersten positionssensitiven Detektor (28a), wobei
· mit der ersten Kamera (24,24a,60a) ein erstes Bild erfassbar ist und im ersten Bild zumindest ein Teil der am Ziel (29c,65,81) reflektierten Beleuchtungsstrahlung als erste Zielposition (29a) bestimmbar ist und
· die erste Kamera (24,24a,60a) mit deren optischer Achse (26a) versetzt zur Messachse (57) angeordnet ist, und
□ einer derart konfigurierten Steuerungs- und Auswerteeinheit, dass bei Ausführung einer Suchfunktionalität ein Auffinden des Ziels (29c,65,81) in Abhängigkeit von der ersten Zielposition (29a) erfolgt,
**dadurch gekennzeichnet, dass**
• die Zielsucheinheit eine zweite ein zweites Sichtfeld (27b) definierende Kamera (24,24b,60b) mit einem zweiten positionssensitiven Detektor (28b) aufweist, wobei
□ mit der zweiten Kamera (24,24b,60b) ein zweites Bild erfassbar ist und im zweiten Bild zumindest ein Teil der am Ziel (29c,65,81) reflektierten Beleuchtungsstrahlung als zweite Zielposition (29b) bestimmbar ist und
□ die zweite Kamera (24,24b,60b) mit relativ zur ersten Kamera (24,24a,60a) bekannter und fixer Kamerapositionierung derart angeordnet ist, dass
· die Sichtfelder (27a,27b) der ersten und zweiten Kamera (24,24a,24b,60a,60b) zumindest teilweise überlappen und
· die zweite Kamera (24,24b,60b) mit deren optischer Achse (26b) versetzt zur Messachse (57) angeordnet ist, und
• bei Ausführung der Suchfunktionalität das Auffinden des Ziels (29c,65,81) in Abhängigkeit von einer gemeinsamen Heranziehung von sowohl der ersten als auch der zweiten Zielposition (29a,29b) erfolgt, sodass basierend darauf die Messstrahlung (17,21) auf das Ziel (29c,65,81) ausrichtbar ist.

2. Lasertracker (10,11,12) nach Anspruch 1,
**dadurch gekennzeichnet, dass**
die Steuerungs- und Auswerteeinheit derart konfiguriert ist, dass bei Ausführung der Suchfunktionalität Vieldeutigkeiten, die bei einer Heranziehung von nur der ersten Zielposition (29a) zum Auffinden des Ziels (29c,65,81) und durch eine durch die Messachse (57) und die optischen Achsen (26a,26b) der ersten und zweiten Kamera (24,24a,24b,60a,60b) gegebene Parallaxe vorhanden sind, durch die gemeinsame Heranziehung von sowohl der ersten als auch der zweiten Zielposition (29a,29b) zum Auffinden des Ziels (29c,65,81) aufgelöst werden.

3. Lasertracker (10,11,12) nach Anspruch 1 oder 2,
**dadurch gekennzeichnet, dass**
die Steuerungs- und Auswerteeinheit derart konfiguriert ist, dass bei Ausführung der Suchfunktionalität in Abhängigkeit von der ersten und zweiten Zielposition (29a,29b) eine Grobentfernung zum Ziel (29c,65,81) bestimmt wird.

4. Lasertracker (10,11,12) nach Anspruch 3,
**dadurch gekennzeichnet, dass**
die Steuerungs- und Auswerteeinheit derart konfiguriert ist, dass bei Ausführung der Suchfunktionalität in Abhängigkeit von der ersten und zweiten Zielposition (29a,29b) jeweils eine Zielrichtung (63a,63b) zum Ziel (29c,65,81) abgeleitet und eine Grobposition in Abhängigkeit von den Zielrichtungen (63a,63b) bestimmt wird, insbesondere mittels Stereophotogrammetrie.

5. Lasertracker (10,11,12) nach einem der Ansprüche 1 bis 4,
**dadurch gekennzeichnet, dass**
die erste und zweite Kamera (24,24a,24b,60a,60b) derart angeordnet sind, dass die Messachse (57) zumindest teilweise in einem durch die überlappenden Sichtfelder (27a,27b) der ersten und zweiten Kamera (24,24a,24b,60a,60b) definierten Überlappungsbereich (28) liegt.

6. Lasertracker nach Anspruch 5,
**dadurch gekennzeichnet, dass**
die erste und zweite Kamera (24,24a,24b,60a,60b) derart angeordnet sind, dass deren optische Achsen (26a,26b) jeweils
• parallel versetzt zur Messachse (57) oder
• in einem definierten Winkel relativ zur Messachse (57) angeordnet sind,
und/oder
die erste und zweite Kamera (24,24a,24b,60a,60b) achsensymmetrisch relativ zur Messachse (57) angeordnet sind.

7. Lasertracker (10,11,12) nach einem der Ansprüche 1 bis 6,
**dadurch gekennzeichnet; dass**
der Lasertrackern (10,11,12) eine dritte oder mehrere Kameras (24) mit einem dritten oder mehreren positionssensitiven Detektoren zur Erfassung einer dritten oder mehreren Zielpositionen aufweist, wobei die dritte oder mehreren Kameras (24) derart angeordnet sind, dass eine dritte oder mehrere optische Achsen der dritten oder mehreren Kameras versetzt zur Messachse (57) angeordnet sind, und die Steuerungs- und Auswerteeinheit derart konfiguriert ist, dass bei Ausführung der Suchfunktionalität das Suchen des Ziels (29c,65,81) in Abhängigkeit von den drei oder mehreren Zielpositionen erfolgt, insbesondere wobei zumindest eine der Kameras (24) zur Erfassung elektromagnetischer Strahlung in einem definierten Bereich um eine Beleuchtungswellenlänge der Beleuchtungsstrahlung ausgebildet ist.

8. Lasertracker (10,11,12) nach einem der Ansprüche 1 bis 7,
**dadurch gekennzeichnet, dass**
die Strahllenkeinheit vermittels der Steuerungs- und Auswerteeinheit derart steuerbar ist, dass die Messstrahlung (17,21) in Abhängigkeit von der ersten und zweiten Zielposition (29a,29b) ausgerichtet wird, insbesondere automatisch, insbesondere in Abhängigkeit von der Grobposition des Ziels (29c,65,81), sodass die Messstrahlung (17,21) auf das Ziel (29c,65,81) trifft und mittels der Feindistanzmesseinheit die Distanz zum Ziel (29c,65,81) präzise bestimmbar ist.

9. Lasertracker (10,11,12) nach einem der Ansprüche 1 bis 8,
**dadurch gekennzeichnet, dass**
der Lasertracker (10,11,12) aufweist
• eine um die Stehachse (41) relativ zur Basis (40) motorisiert schwenkbare und die Neigungsachse (31) definierende Stütze (30) und
• eine als Strahllenkeinheit ausgebildete, um die Neigungsachse (31) relativ zur Stütze (30) motorisiert schwenkbare Anzieleinheit (20) mit einer Teleskopeinheit zur Emission der Messstrahlung (17,21) und zum Empfang von zumindest einem Teil der am Ziel (29c,65,81) reflektierten Messstrahlung (17,21).

10. Verfahren zum Suchen eines Ziels (29c,65,81) mit einem Lasertracker (10,11,12), wobei der
Lasertracker (10,11,12) aufweist
• eine eine Stehachse (41) definierende Basis (40),
• eine Strahllenkeinheit zum Emittieren einer Messstrahlung (17,21) und zum Empfangen von zumindest einem Teil der am Ziel (29c,65,81) reflektierten Messstrahlung (17,21), wobei
□ die Strahllenkeinheit um die Stehachse (41) und eine Neigungsachse (31) relativ zur Basis (40) motorisiert schwenkbar ist und
□ durch eine Emissionsrichtung der Messstrahlung (17,21) eine Messachse (57) definiert ist, und
• einen mit seiner Erfassungsrichtung koaxial zur Messachse angeordneten positionssensitiven Detektor (58) zur Feinanzielung und Verfolgung des Ziels (29c,65,81) mittels Detektieren der am Ziel (29c,65,81) reflektierten Messstrahlung (17,21),
wobei das Verfahren erfolgt mit
• einem Beleuchten des Ziels (29c,65,81) mit elektromagnetischer Beleuchtungsstrahlung,
• einem positionssensitiven Erfassen eines ersten Bildes mit einer ersten am Lasertracker (10,11,12) angeordneten und ein erstes Sichtfeld (27a) definierenden Kamera (24,24a,60a), wobei die erste Kamera (24,24a,60a) mit deren optischer Achse (26a) versetzt zur Messachse (57) angeordnet ist, und
• einem ersten Bestimmen von zumindest einem Teil der am Ziel (29c,65,81) reflektierten Beleuchtungsstrahlung als erste Zielposition (29a) im ersten Bild,
**gekennzeichnet durch**
• ein positionssensitives Erfassen eines zweiten Bildes mit einer zweiten am Lasertracker (10,11,12) angeordneten und ein zweites Sichtfeld (27a) definierenden Kamera (24,24b,60b),
• ein zweites Bestimmen von zumindest einem Teil der am Ziel (29c,65,81) reflektierten Beleuchtungsstrahlung als zweite Zielposition (29b) im zweiten Bild, wobei die zweite Kamera (24,24b,60b) mit relativ zur ersten Kamera (24,24a,60a) bekannter und fixer Kamerapositionierung derart angeordnet ist, dass
□ die Sichtfelder (27a,27b) der ersten und zweiten Kamera (24,24a,24b,60a,60b) zumindest teilweise überlappen und
□ die zweite Kamera (24,24b,60b) mit deren optischer Achse (26b) versetzt zur Messachse (57) angeordnet ist, und
• ein Auffinden des Ziels (29c,65,81) in Abhängigkeit von einem gemeinsamen Heranziehen von sowohl der ersten als auch der zweiten Zielposition (29a,29b), sodass basierend darauf die Messstrahlung (17,21) auf das Ziel (29c,65,81) ausrichtbar ist.

11. Verfahren nach Anspruch 10,
dadurch gekennzeichet, dass
Vieldeutigkeiten, die bei einem Heranziehen von nur der ersten Zielposition (29a) zum Auffinden des Ziels (29c,65,81) und durch eine durch die Messachse (57) und die optischen Achsen (26a,26b) der ersten und zweiten Kamera (24,24a,24b,60a,60b) gegebene Parallaxe vorhanden sind, durch das gemeinsame Heranziehen von sowohl der ersten als auch der zweiten Zielposition (29a,29b) aufgelöst werden.

12. Verfahren nach Anspruch 10 oder 11,
**dadurch gekennzeichnet, dass**
in Abhängigkeit von der ersten und zweiten Zielposition (29a,29b) eine Grobentfernung zum Ziel (29c, 65, 81) bestimmt wird.

13. Verfahren nach Anspruch 12,
**dadurch gekennzeichnet, dass**
in Abhängigkeit von der ersten und zweiten Zielposition (29a,29b) jeweils eine Zielrichtung (63a,63b) zum Ziel (29c,65,81) abgeleitet und in Abhängigkeit von den Zielrichtungen (63a,63b) eine Grobposition des Ziels (29c,65,81) bestimmt wird, insbesondere mittels Stereophotogrammetrie.

14. Verfahren nach einem der Ansprüche 10 bis 13,
**dadurch gekennzeichnet, dass**
die Strahllenkeinheit in Abhängigkeit von der ersten und zweiten Zielposition (29a,29b) ausgerichtet wird, insbesondere automatisch, insbesondere in Abhängigkeit der Grobposition des Ziels (29c,65,81), sodass die Messstrahlung (17,21) auf das Ziel (29c,65,81) trifft und mittels der Feindistanzmesseinheit die Distanz zum Ziel (29c,65,81) präzise bestimmbar ist, und/oder zumindest ein positionssensitives Erfassen derart erfolgt, dass elektromagnetische Strahlung in einem definierten Bereich um eine Beleuchtungswellenlänge der Beleuchtungsstrahlung erfasst wird.

15. Computerprogrammprodukt mit Programmcode, der auf einem maschinenlesbaren Träger gespeichert ist, zur Steuerung bzw. Durchführung des Verfahrens nach einem der Ansprüche 10 bis 14.

## Claims

1. Laser tracker (10, 11, 12) for continuously tracking a reflective target (29c, 65, 81) and for determining the position of the target (29c, 65, 81) comprising
• a base (40) defining a vertical axis (41),
• a beam directing unit for emitting a measurement radiation (17, 21) and for receiving at least part of the measurement radiation (17, 21) reflected at the target (29c, 65, 81) wherein
□ the beam directing unit is pivotable in motorized fashion about the vertical axis (41) and an inclination axis (31) relative to the base (40) and
□ a measurement axis (57) is defined by an emission direction of the measurement radiation (17, 21),
• a position-sensitive detector (58) arranged with its detection direction coaxially with respect to the measurement axis and serving for fine targeting and tracking of the target (29c, 65, 81) by means of detection of measurement radiation (17, 21) reflected at the target (29c, 65, 81),
• a fine distance measuring unit for precisely determining the distance with respect to the target (29c, 65, 81) by means of the measurement radiation (17, 21),
• an angle measuring functionality for determining an orientation of the beam directing unit relative to the base (40) and
• a target seeking unit having
□ illumination means (25) for illuminating the target (29c, 65, 81) with electromagnetic illumination radiation,
□ a first camera (24, 24a, 60a) defining a first field of view (27a) and comprising a first position-sensitive detector (28a), wherein
· a first image can be acquired by means of the first camera (24, 24a, 60a) and, in the first image, at least part of the illumination radiation reflected at the target (29c, 65, 81) can be determined as first target position (29a), and
· the first camera (24, 24a, 60a) is arranged with the optical axis (26a) thereof offset with respect to the measurement axis (57), and
□ a control and evaluation unit configured in such a way that upon implementing a seeking functionality, the target (29c, 65, 81) is found in a manner dependent on the first target position (29a),
**characterized in that**
• the target seeking unit has a second camera (24, 24b, 60b) defining a second field of view (27b) and comprising a second position-sensitive detector (28b) wherein
□ a second image can be acquired by means of the second camera (24, 24b, 60b) and, in the second image, at least part of the illumination radiation reflected at the target (29c, 65, 81) can be determined as second target position (29b), and
□ the second camera (24, 24b, 60b) is arranged with camera positioning that is known and fixed relative to the first camera (24, 24a, 60a) in such a way that
· the fields of view (27a, 27b) of the first and second cameras (24, 24a, 24b, 60a, 60b) at least partly overlap, and
· the second camera (24, 24b, 60b) is arranged with the optical axis (26b) thereof offset with respect to the measurement axis (57), and
• upon implementing the seeking functionality, the target (29c, 65, 81) is found in a manner dependent on jointly using both the first and the second target position (29a, 29b), such that on the basis thereof the measurement radiation (17, 21) can be aligned with the target (29c, 65, 81).

2. Laser tracker (10, 11, 12) according to Claim 1,
**characterized in that**
the control and evaluation unit is configured in such a way that upon implementing the seeking functionality, ambiguities present upon using only the first target position (29a) for finding the target (29c, 65, 81) and as a result of a parallax resulting from the measurement axis (57) and the optical axes (26a, 26b) of the first and second cameras (24, 24a, 24b, 60a, 60b) are resolved by jointly using both the first and the second target positions (29a, 29b) for finding the target (29c, 65, 81).

3. Laser tracker (10, 11, 12) according to Claim 1 or 2,
**characterized in that**
the control and evaluation unit is configured in such a way that upon implementing the seeking functionality in a manner dependent on the first and second target positions (29a, 29b), a coarse distance with respect to the target (29c, 65, 81) is determined.

4. Laser tracker (10, 11, 12) according to Claim 3,
**characterized in that**
the control and evaluation unit is configured in such a way that upon implementing the seeking functionality in a manner dependent on the first and second target positions (29a, 29b), in each case a target direction (63a, 63b) with respect to the target (29c, 65, 81) is derived and a coarse position is determined in a manner dependent on the target directions (63a, 63b), in particular by means of stereophotogrammetry.

5. Laser tracker (10, 11, 12) according to any one of Claims 1 to 4,
**characterized in that**
the first and second cameras (24, 24a, 24b, 60a, 60b) are arranged in such a way that the measurement axis (57) lies at least partly in an overlap region (28) defined by the overlapping fields of view (27a, 27b) of the first and second cameras (24, 24a, 24b, 60a, 60b).

6. Laser tracker (10, 11, 12) according to Claim 5,
**characterized in that**
the first and second cameras (24, 24a, 24b, 60a, 60b) are arranged in such a way that the optical axes (26a, 26b) thereof are arranged in each case
• parallel in an offset manner with respect to the measurement axis (57) or
• at a defined angle relative to the measurement axis (57),
and/or
the first and second cameras (24, 24a, 24b, 60a, 60b) are arranged axially symmetrically relative to the measurement axis (57).

7. Laser tracker (10, 11, 12) according to any one of Claims 1 to 6,
**characterized in that**
the laser tracker (10, 11, 12) has a third or a plurality of cameras (24) having a third or a plurality of position-sensitive detectors for detecting a third or a plurality of target positions, wherein the third or the plurality of cameras (24) are arranged in such a way that a third or a plurality of optical axes of the third or the plurality of cameras are arranged in an offset manner with respect to the measurement axis (57) and the control and evaluation unit is configured in such a way that upon implementing the seeking functionality, the target (29c, 65, 81) is sought in a manner dependent on the three or the plurality of target positions, in particular wherein at least one of the cameras (24) is designed for detecting electromagnetic radiation in a defined range around an illumination wavelength of the illumination radiation.

8. Laser tracker (10, 11, 12) according to any one of Claims 1 to 7,
**characterized in that**
the beam directing unit is controllable by means of the control and evaluation unit in such a way that the measurement radiation (17, 21) is aligned in a manner dependent on the first and second target positions (29a, 29b), in particular automatically, in particular in a manner dependent on the coarse position of the target (29c, 65, 81), such that the measurement radiation (17, 21) impinges on the target (29c, 65, 81) and the distance with respect to the target (29c, 65, 81) can be determined precisely by means of the fine distance measuring unit.

9. Laser tracker (10, 11, 12) according to any one of Claims 1 to 8,
**characterized in that**
the laser tracker (10, 11, 12) comprises
• a support (30), which is pivotable in motorized fashion about the vertical axis (41) relative to the base (40) and defines the inclination axis (31), and
• a targeting unit (20), which is embodied as beam directing unit and is pivotable in motorized fashion about the inclination axis (31) relative to the support (30) and comprises a telescope unit for emitting the measurement radiation (17, 21) and for receiving at least part of the measurement radiation (17, 21) reflected at the target (29c, 65, 81)

10. Method for seeking a target (29c, 65, 81) using a laser tracker (10, 11, 12), where the laser tracker (10, 11, 12) comprises
• a base (40) defining a vertical axis (41),
• a beam directing unit for emitting a measurement radiation (17, 21) and for receiving at least part of the measurement radiation (17, 21) reflected at the target (29c, 65, 81) wherein
□ the beam directing unit is pivotable in motorized fashion about the vertical axis (41) and an inclination axis (31) relative to the base (40) and
□ a measurement axis (57) is defined by an emission direction of the measurement radiation (17, 21), and
• a position-sensitive detector (58) arranged with its detection direction coaxially with respect to the measurement axis and serving for the fine targeting and tracking of the target (29c, 65, 81) by means of detection of the measurement radiation (17, 21) reflected at the target (29c, 65, 81),
wherein the method is effected by
• illuminating the target (29c, 65, 81) with electromagnetic illumination radiation,
• position-sensitively detecting a first image by means of a first camera (24, 24a, 60a), which is arranged on the laser tracker (10, 11, 12) and defines a first field of view (27a), wherein the first camera (24, 24a, 60a) is arranged with the optical axis (26a) thereof in an offset manner with respect to the measurement axis (57), and
• firstly determining at least part of the illumination radiation reflected at the target (29c, 65, 81) as first target position (29a) in the first image,
**characterized by**
• position-sensitively detecting a second image by means of a second camera (24, 24b, 60b), which is arranged on the laser tracker (10, 11, 12) and defines a second field of view (27b),
• secondly determining at least part of the illumination radiation reflected at the target (29c, 65, 81) as second target position (29b) in the second image, wherein the second camera (24, 24b, 60b) is arranged with camera positioning that is known and fixed relative to the first camera (24, 24a, 60a) in such a way that
□ the fields of view (27a, 27b) of the first and second cameras (24, 24a, 24b, 60a, 60b) at least partly overlap, and
□ the second camera (24, 24b, 60b) is arranged with the optical axis (26b) thereof in an offset manner with respect to the measurement axis (57), and
• finding the target (29c, 65, 81) in a manner dependent on jointly using both the first and the second target position (29a, 29b), such that on the basis thereof the measurement radiation (17, 21) can be aligned with the target (29c, 65, 81).

11. Method according to Claim 10,
**characterized in that**
ambiguities present upon using only the first target position (29a) for finding the target (29c, 65, 81) and as a result of a parallax resulting from the measurement axis (57) and the optical axes (26a, 26b) of the first and second cameras (24, 24a, 24b, 60a, 60b) are resolved by jointly using both the first and the second target position (29a, 29b).

12. Method according to Claim 10 or 11,
**characterized in that**
in a manner dependent on the first and second target positions (29a, 29b), a coarse distance with respect to the target (29c, 65, 81) is determined.

13. Method according to Claim 12,
**characterized in that**
in a manner dependent on the first and second target positions (29a, 29b), in each case a target direction (63a, 63b) with respect to the target (29c, 65, 81) is derived and a coarse position of the target (29c, 65, 81) is determined in a manner dependent on the target directions (63a, 63b), in particular by means of stereophotogrammetry.

14. Method according to any one of Claims 10 to 13,
**characterized in that**
the beam directing unit is aligned in a manner dependent on the first and second target positions (29a, 29b), in particular automatically, in particular in a manner dependent on the coarse position of the target (29c, 65, 81), such that the measurement radiation (17, 21) impinges on the target (29c, 65, 81) and the distance with respect to the target (29c, 65, 81) can be determined precisely by means of the fine distance measuring unit, and/or at least one position-sensitive detection is effected in such a way that electromagnetic radiation is detected in a defined range around an illumination wavelength of the illumination radiation.

15. Computer program product comprising program code stored on a machine-readable carrier, for controlling or carrying out the method according to any one of Claims 10 to 14.

## Revendications

1. Appareil de suivi laser (10, 11, 12) pour le suivi continu d'une cible réfléchissante (29c, 65, 81) et pour la détermination de position de la cible (29c, 65, 81) avec
• une base (40) qui définit un axe vertical (41),
• une unité de direction des rayons pour l'émission d'un rayonnement de mesure (17, 21) et pour la réception d'au moins une partie du rayonnement de mesure (17, 21) réfléchi sur la cible (29c, 65, 81), cependant que
□ l'unité de direction des rayons est pivotante de manière motorisée autour de l'axe vertical (41) et d'un axe d'inclinaison (31) par rapport à la base (40) et
□ qu'un axe de mesure (57) est défini par une direction d'émission du rayonnement de mesure (17, 21),
• un détecteur sensible à la position (58) placé avec sa direction de détection en étant coaxial par rapport à l'axe de mesure pour le ciblage fin et la poursuite de la cible (29c, 65, 81) au moyen de la détection du rayonnement de mesure (17, 21) réfléchi sur la cible (29c, 65, 81),
• une unité de mesure fine de la distance pour la détermination précise de la distance par rapport à la cible (29c, 65, 81) au moyen du rayonnement de mesure (17, 21),
• une fonction de mesure d'angle pour la détermination d'une orientation de l'unité de direction des rayons par rapport à la base (40) et
• une unité de recherche de cible avec
□ des moyens d'éclairage (25) pour l'éclairage de la cible (29c, 65, 81) avec un rayonnement d'éclairage électromagnétique,
□ une première caméra (24, 24a, 60a), qui définit un premier champ de vision (27a), avec un premier détecteur sensible à la position(28a), cependant
○ qu'une première image peut être saisie avec la première caméra (24, 24a, 60a) et qu'au moins une partie du rayonnement d'éclairage réfléchi sur la cible (29c, 65, 81) peut être déterminée dans la première image comme première position de cible (29a) et
o que la première caméra (24, 24a, 60a) est placée décalée avec son axe optique (26a) par rapport à l'axe de mesure (57) et
□ une unité de commande et d'évaluation configurée de telle manière que, lors de l'exécution d'une fonction de recherche, une localisation de la cible (29c, 65, 81) est effectuée en fonction de la première position de cible (29a),
**caractérisé en ce que**
• l'unité de recherche de cible présente une seconde caméra (24, 24b, 60b) qui définit un second champ de vision (27b), avec un second détecteur sensible à la position (28b), cependant
□ qu'une seconde image peut être saisie avec la seconde caméra (24, 24b, 60b) et qu'au moins une partie du rayonnement d'éclairage réfléchi sur la cible (29c, 65, 81) peut être déterminée dans la seconde image comme seconde position de cible (29b) et
□ que la seconde caméra (24, 24b, 60b) est placée avec un positionnement de caméra connu et fixe par rapport à la première caméra (24, 24a, 60a) de telle manière que
○ les champs de vision (27a, 27b) de la première et de la seconde caméra (24, 24a, 24b, 60a, 60b) se chevauchent au moins partiellement et que
○ la seconde caméra (24, 24b, 60b) est placée décalée avec son axe optique (26b) par rapport à l'axe de mesure (57) et
• que, lors de l'exécution de la fonction de recherche, la localisation de la cible (29c, 65, 81) se fait en fonction d'une utilisation commune de la première ainsi que de la seconde position de cible (29a, 29b) si bien qu'en se basant là-dessus le rayonnement de mesure (17, 21) peut être orienté sur la cible (29c, 65, 81).

2. Appareil de suivi laser (10, 11, 12) selon la revendication 1,
**caractérisé en ce que**
l'unité de commande et d'évaluation est configurée de telle manière que, lors de l'exécution de la fonction de recherche, des ambiguïté, qui existent lors d'une utilisation de seulement la première position de cible (29a) pour localiser la cible (29c, 65, 81) et par une parallaxe donnée par l'axe de mesure (57) et les axes optiques (26a, 26b) de la première et de la seconde caméra (24, 24a, 24b, 60a, 60b), sont levées par l'utilisation commune de la première position de cible ainsi que de la seconde position de cible (29a, 29b) pour localiser la cible (29c, 65, 81).

3. Appareil de suivi laser (10, 11, 12) selon la revendication 1 ou 2,
**caractérisé en ce que**
l'unité de commande et d'évaluation est configurée de telle manière que, lors de l'exécution de la fonction de recherche, une distance grossière par rapport à la cible (29c, 65, 81) est déterminée en fonction de la première et de la seconde position de cible (29a, 29b).

4. Appareil de suivi laser (10, 11, 12) selon la revendication 3,
**caractérisé en ce que**
l'unité de commande et d'évaluation est configurée de telle manière que, lors de l'exécution de la fonction de recherche, une direction de cible (29a, 29b) vers la cible (29c, 65, 81) est dérivée respectivement en fonction de la première et de la seconde position de cible (29a, 29b) et une position grossière est déterminée en fonction des directions de cible (63a, 63b), en particulier au moyen de la stéréophotogrammétrie.

5. Appareil de suivi laser (10, 11, 12) selon l'une des revendications 1 à 4,
**caractérisé en ce que**
la première et la seconde caméra (24, 24a, 24b, 60a, 60b) sont placées de telle manière que l'axe de mesure (57) se situe au moins partiellement dans une zone de chevauchement (28) définie par les champs de vision qui se chevauchent (27a, 27b) de la première et de la seconde caméra (24, 24a, 24b, 60a, 60b).

6. Appareil de suivi laser selon la revendication 5,
**caractérisé en ce que**
la première et la seconde caméra (24, 24a, 24b, 60a, 60b) sont placées de telle manière que leurs axes optiques (26a, 26b) sont placés respectivement
• décalés parallèlement par rapport à l'axe de mesure (57) ou
• dans un angle défini par rapport à l'axe de mesure (57) et/ou
la première et la seconde caméra (24, 24a, 24b, 60a, 60b) sont placées en symétrie axiale par rapport à l'axe de mesure (57).

7. Appareil de suivi laser (10, 11, 12) selon l'une des revendications 1 à 6,
**caractérisé en ce que**
l'appareil de suivi laser (10, 11, 12) présente une troisième ou plusieurs caméras (24) avec un troisième ou plusieurs détecteurs sensibles à la position pour la détection d'une troisième ou de plusieurs positions de cible, cependant que la troisième ou plusieurs caméras (24) sont placées de telle manière qu'un troisième ou plusieurs axes optiques de la troisième ou de plusieurs caméras sont placés décalés par rapport à l'axe de mesure (57) et l'unité de commande et d'évaluation est configurée de telle manière que, lors de l'exécution de la fonction de recherche, la recherche de la cible (29c, 65, 81) se fait en fonction des trois ou plusieurs positions de cible, en particulier cependant qu'au moins l'une des caméras (24) est configurée pour la détection de rayonnement électromagnétique dans une zone définie autour de la longueur d'onde d'éclairage du rayonnement d'éclairage.

8. Appareil de suivi laser (10, 11, 12) selon l'une des revendications 1 à 7,
**caractérisé en ce que**
l'unité de direction des rayons peut être commandée au moyen de l'unité de commande et d'évaluation de telle manière que le rayonnement de mesure (17, 21) est orienté en fonction de la première et de la seconde position de cible (29a, 29b), en particulier de manière automatique, en particulier en fonction de la position grossière de la cible (29c, 65, 81) si bien que le rayonnement de mesure (17, 21) touche la cible (29c, 65, 81) et que la distance par rapport à la cible (29c, 65, 81) peut être déterminée précisément au moyen de l'unité de mesure fine de la distance.

9. Appareil de suivi laser (10, 11, 12) selon l'une des revendications 1 à 8,
**caractérisé en ce que**
l'appareil de suivi laser (10, 11, 12) présente
• un appui (30) pivotant de manière motorisée autour de l'axe vertical (41) par rapport à la base (40) et qui définit l'axe d'inclinaison (31) et
• une unité de ciblage (20) configurée comme unité de direction de rayons, pivotante de manière motorisée autour de l'axe d'inclinaison (31) par rapport à l'appui (30) avec une unité télescopique pour l'émission du rayonnement de mesure (17, 21) et pour la réception d'au moins une partie du rayonnement de mesure (17, 21) réfléchi sur la cible (29c, 65, 81).

10. Procédé pour la recherche d'une cible (29c, 65, 81) avec un appareil de suivi laser (10, 11, 12), cependant que l'appareil de suivi laser (10, 11, 12) présente
• une base (40) qui définit un axe vertical (41),
• une unité de direction des rayons pour l'émission d'un rayonnement de mesure (17, 21) et pour la réception d'au moins une partie du rayonnement de mesure (17, 21) réfléchi sur la cible (29c, 65, 81), cependant que
□ l'unité de direction des rayons est pivotante de manière motorisée autour de l'axe vertical (41) et d'un axe d'inclinaison (31) par rapport à la base (40) et
□ qu'un axe de mesure (57) est défini par une direction d'émission du rayonnement de mesure (17, 21) et
• un détecteur sensible à la position (58) placé avec sa direction de détection en étant coaxial par rapport à l'axe de mesure pour le ciblage fin et la poursuite de la cible (29c, 65, 81) au moyen de la détection du rayonnement de mesure (17, 21) réfléchi sur la cible (29c, 65, 81),
cependant que le procédé se fait avec
• un éclairage de la cible (29c, 65, 81) avec un rayonnement d'éclairage électromagnétique,
• une détection sensible à la position d'une première image avec une première caméra (24, 24a, 60a) placée sur l'appareil de suivi laser (10, 11, 12) et qui définit un premier champ de vision (27a), cependant que la première caméra (24, 24a, 60a) est placée avec son axe optique (26a) décalé par rapport à l'axe de mesure (57) et
• une première détermination d'au moins une partie du rayonnement d'éclairage réfléchi sur la cible (29c, 65, 81) comme première position de cible (29a) dans la première image,
**caractérisé par**
• une détection sensible à la position d'une seconde image avec une seconde caméra (24, 24b, 60b) placée sur l'appareil de suivi laser (10, 11, 12) et qui définit un second champ de vision (27a),
• une seconde détermination d'au moins une partie du rayonnement d'éclairage réfléchi sur la cible (29c, 65, 81) comme seconde position de cible (29b) dans la seconde image, cependant que la seconde caméra (24, 24a, 60a) de positionnement de caméra connu et fixe est placée de telle manière que
□ les champs de vision (27a, 27b) de la première et de la seconde caméra (24, 24a, 24b, 60a, 60b) se chevauchent au moins partiellement et
□ la seconde caméra (24, 24a, 24b, 60a, 60b) est placée avec son axe optique (26b) décalé par rapport à l'axe de mesure (57) et
• une localisation de la cible (29c, 65, 81) en fonction d'une utilisation commune de la première position de cible aussi bien que de la seconde position de cible (29a, 29b) si bien qu'en se basant là-dessus le rayonnement de mesure (17, 21) peut être orienté sur la cible (29c, 65, 81).

11. Procédé selon la revendication 10,
**caractérisé en ce que**
des ambiguïtés, qui existent lors d'une utilisation de seulement la première position de cible (29a) pour localiser la cible (29c, 65, 81) et par une parallaxe donnée par l'axe de mesure (57) et les axes optiques (26a, 26b) de la première et de la seconde caméra (24, 24a, 24b, 60a, 60b), sont levées par l'utilisation commune de la première position de cible ainsi que de la seconde position de cible (29a, 29b).

12. Procédé selon la revendication 10 ou 11,
**caractérisé en ce**
**qu'**une distance grossière par rapport à la cible (29c, 65, 81) est déterminée en fonction de la première et de la seconde position de cible (29a, 29b).

13. Procédé selon la revendication 12,
**caractérisé en ce**
**qu'**une direction de cible (63a, 63b) vers la cible (29c, 65, 81) est dérivée respectivement en fonction de la première et de la seconde position de cible (29a, 29b) et une position grossière de la cible (29c, 65, 81) est déterminée en fonction des directions de cible (63a, 63b), en particulier au moyen de la stéréophotogrammétrie.

14. Procédé selon l'une des revendications 10 à 11,
**caractérisé en ce que**
l'unité de direction des rayons est orientée en fonction de la première et de la seconde position de cible (29a, 29b), en particulier de manière automatique, en particulier en fonction de la position grossière de la cible (29c, 65, 81), si bien que le rayonnement de mesure (17, 21) touche la cible (29c, 65, 81) et que la distance par rapport à la cible (29c, 65, 81) peut être déterminée de manière précise au moyen de l'unité de mesure fine de la distance et/ou au moins une détection sensible à la position se fait de telle manière que le rayonnement électromagnétique est détecté dans une plage définie autour d'une longueur d'ondes d'éclairage du rayonnement d'éclairage.

15. Produit programme d'ordinateur avec code de programme qui est mémorisé sur un support lisible par machine pour la commande ou l'exécution du procédé selon l'une des revendications 10 à 14.
